# FASCICULE DE BREVET EUROPEEN

(11) **EP 1 435 306 B1**
(45) Date de publication et mention de la délivrance du brevet: **05.04.2006**
(21) Numéro de dépôt: 03029560.4
(22) Date de dépôt: 22.12.2003
(51) Int. Cl.: B60H 3/06

(54) **Commande d'une installation de chauffage et/ou climatisation comprenant un pulseur et un moyen de filtration**
Heizung- und/oder Klimaanlage- Steuerung mit einem Gebläse und Luftfiltermittel
Control of a heating and/or air conditioning installation comprising a ventilator and filtration means

(30) Priorité: 06.01.2003 FR 0300069
(43) Date de publication de la demande: 07.07.2004
(73) Titulaire: VALEO SYSTEMES THERMIQUES, 78320 Le Mesnil Saint-Denis (FR)
(72) Inventeur: Feuillard, Vincent, 78320 Le Mesnil St Denis (FR); Ostad, Mostafa, 75013 Paris (FR); Sirot, Jean-Pascal, 78180 Montigny Le Bretonneux (FR); Paumier, Carine, 78000 Versailles (FR); Ladrech, Frédéric, 78310 Maurepars (FR)

(56) Documents cités:
- EP-A- 1 249 265
- WO-A-01/66258
- DE-U- 20 005 814
- FR-A- 2 838 379
- US-A- 6 099 609
- US-A1- 2003 133 859
- US-B1- 6 375 721

## Description

### Arrière-plan de l'invention

La présente invention concerne la commande d'une installation de chauffage et/ou climatisation comprenant un pulseur et un moyen de filtration du type photocatalyseur ou plasma-catalytique combiné à une filtration électrostatique.

De façon traditionnelle, dans un véhicule automobile, la purification de l'air de l'habitacle est assurée par des filtres à particules, des filtres à charbon actif, ou une combinaison des deux.

Les molécules des gaz polluants sont retenues par un phénomène d'adsorption sur la surface poreuse d'un adsorbant. Par la suite, une désorption ou relargage des polluants peut être effectuée sous certaines conditions de température.

La structure même de ces filtres impose une forte perte de charge initiale et un colmatage rapide qui se traduisent par une faible durée de vie estimée à environ 20000 km.

Pour remédier à cet inconvénient, il est connu d'utiliser la photocatalyse qui consiste à épurer un fluide par l'action simultanée d'une ou plusieurs sources UV et d'un agent catalyseur tel que le dioxyde de titanium « TiO2» déposé sur un support. Une telle technologie est connue du document FR 2838379.

En particulier, la technique de filtration de gaz par photocatalyse est associée à la technique de filtration par adsorption.

En effet, un adsorbant tel que le charbon actif adsorbe les polluants instantanément en les piégeant dans ses pores sans les détruire. Ensuite, l'agent photocatalyseur désorbe les molécules du polluant piégés sur la surface de l'adsorbant en les détruisant grâce à des réactions chimiques d'oxydation-réduction. Cela permet de regénérer l'adsorbant et par conséquent d'augmenter la durée de vie du filtre.

Mais l'incorporation d'un photocatalyseur dans une installation de chauffage et/ou climatisation nécessite l'ajout d'une alimentation électrique qu'il est nécessaire de gérer intelligemment, ainsi que des points de mesure.

Par ailleurs, les sources UV génèrent de la chaleur et risquent de provoquer un réchauffement excessif de l'environnement du photocatalyseur qui nuit au bon fonctionnement de l'installation de chauffage et/ou climatisation.

### Objet et résumé de l'invention

L'invention a pour objet un dispositif et un procédé de commande d'une installation de chauffage et/ou climatisation comprenant un pulseur et un moyen de filtration, de sorte qu'une synergie intelligente est crée sur le plan aéraulique et électrique entre le pulseur et le moyen de filtration, c'est à dire l'intégration de ce moyen de filtration ne perturbe pas le fonctionnement du reste de l'appareil de climatisation (en particulier le pulseur).

Un but de l'invention est aussi d'éviter tout réchauffement excessif de l'environnement du moyen de filtration, en particulier tout en assurant une régénération optimale du système de filtration, et un fonctionnement optimal de l'installation de chauffage et/ou climatisation.

Encore un autre but de l'invention est d'augmenter la durée de vie du système de filtration.

Ces buts sont atteints grâce à un dispositif de commande d'une installation de chauffage et/ou climatisation de l'habitacle d'un véhicule, ladite installation comprenant un pulseur et un moyen de filtration propre à purifier l'air, le dispositif de commande comprenant un circuit électrique comportant une source d'alimentation, un interrupteur principal, un tableau de commande et un module de variation de vitesse pour délivrer sélectivement au pulseur une tension d'alimentation selon une vitesse sélectionnée au tableau de commande, et des moyens de liaison sont prévus pour s'assurer que le moyen de filtration est mis en fonctionnement quand un flux d'air est présent dans l'installation.

Ainsi, le moyen de filtration se trouve constamment dans un flux d'air lorsqu'il est en fonctionnement.

En particulier, le flux d'air est crée par la mise en fonctionnement du pulseur.

Les moyens de liaison peuvent consister en un circuit de commutation permettant la connexion du moyen de filtration avec la source d'alimentation seulement quand le flux d'air est présent dans l'installation.

Selon un premier mode de réalisation de l'invention, le circuit de commutation comprend un relais relié au tableau de commande et assurant la liaison du moyen de filtration avec la source d'alimentation de sorte que lorsqu'un ordre d'actionnement du pulseur est reçu sur le tableau de commande, le relais connecte le moyen de filtration à la source d'alimentation.

Selon un deuxième mode de réalisation de l'invention, le circuit de commutation comprend un relais inversé relié au tableau de commande et assurant la liaison du moyen de filtration avec la source d'alimentation de sorte que lorsque aucun ordre d'actionnement du pulseur n'est reçu sur le tableau de commande, le relais inversé déconnecte le moyen de filtration de la source d'alimentation.

Selon un troisième mode de réalisation de invention, le circuit de commutation comprend un module de commutation dont l'entrée est reliée aux bornes du pulseur et dont la sortie est reliée au moyen de filtration, de sorte que lorsque la tension aux bornes du pulseur est au-dessus d'une valeur seuil, le module de commutation permet la connexion du moyen de filtration avec la source d'alimentation.

Avantageusement, le module de commutation comprend un transistor MOS dont la tension d'entrée, définie par ladite valeur seuil, est commandée par un transistor bipolaire.

Selon un mode particulier de l'invention, le module de variation de vitesse fonctionne selon la méthode de modulation d'impulsion en largeur en réponse à une information électrique adaptée délivrée par le tableau de commande.

Les moyens de liaison peuvent consister en de câbles électriques reliant le moyen de filtration en dérivation avec le pulseur. Dans ce cas, le moyen de filtration comporte un circuit électrique de pilotage lui permettant de fonctionner sous une tension variable équivalente à la tension d'alimentation variable du pulseur.

Selon une première variante de l'invention, le dispositif comprend un capteur de pollution d'air extérieur, qui délivre une information au tableau de commande, de sorte que ledit tableau de commande agit sur le déplacement d'un volet d'entrée d'air pour l'amener dans une position «recyclage intérieur» lorsque la teneur en polluant détectée par ledit capteur atteint ou dépasse un seuil donné de pollution extérieure.

Le tableau de commande est destiné à agir sur le déplacement dudit volet pour l'amener dans une position «air extérieur» lorsque la teneur en polluant détectée par le capteur de pollution d'air extérieur est en dessous dudit seuil.

Selon une deuxième variante de l'invention, le dispositif comprend un capteur de pollution intérieure disposé dans l'habitacle et qui délivre une information au tableau de commande, de sorte que ledit tableau de commande agit sur le déplacement dudit volet pour l'amener dans une position «air extérieur» lorsque la teneur en polluant détectée par le capteur de pollution intérieure est en dessous d'un seuil donné de pollution intérieure.

Avantageusement, le tableau de commande comprend une unité de contrôle destinée à comparer l'information délivrée par le capteur de pollution d'air extérieur et celle délivrée par le capteur de pollution intérieur afin de mettre le volet d'entrée d'air dans la position la plus favorable, c'est-à-dire, la moins polluante pour l'occupant du véhicule.

Selon une troisième variante de l'invention, le dispositif comprend un temporisateur compris dans le tableau de commande, de sorte que ledit tableau de commande agit sur le déplacement dudit volet pour l'amener dans une position «air extérieur», après l'écoulement d'un temps prédéterminé dans le mode «recyclage intérieur».

Avantageusement, les moyens de liaison comprennent des connecteurs enfichables formant ainsi un module de connexion prêt-à-monter qui facilite le montage ou démontage du moyen de filtration, notamment en deuxième monte automobile.

De préférence, le module de connexion prêt-à-monter du moyen de filtration est alimenté par un branchement au niveau de l'allume-cigare du véhicule.

L'invention vise aussi un procédé de commande d'une installation de chauffage et/ou climatisation de l'habitacle d'un véhicule, ladite installation comprenant un pulseur et un moyen de filtration propre à purifier l'air, le procédé consiste à s'assurer que le moyen de filtration ne fonctionne que si le flux d'air est présent dans l'installation. Ce flux d'air peut être crée par le pulseur.

Le procédé s'assure aussi que l'installation de chauffage et/ou climatisation est dans un mode «recyclage intérieur», si un capteur de pollution d'air extérieur détecte la présence d'un polluant dans le flux d'air envoyé dans ladite installation.

Selon une première variante du procédé, l'installation de chauffage et/ou climatisation est mise dans un mode «air extérieur» si un capteur de pollution intérieure disposé dans l'habitacle ne détecte pas la présence d'un polluant dans l'habitacle.

Selon une deuxième variante du procédé, l'installation de chauffage et/ou climatisation est mise dans un mode «air extérieur», après l'écoulement d'un temps prédéterminé dans le mode «recyclage intérieur»

Selon une troisième variante du procédé, l'installation de chauffage et/ou climatisation est mise dans un mode «air extérieur» si le capteur de pollution extérieure ne détecte pas la présence d'un polluant.

Selon une quatrième variante du procédé, l'installation de chauffage et/ou climatisation est mise sélectivement dans un mode «air extérieur» ou «recyclage intérieur» selon le mode le moins polluant pour l'occupant du véhicule déterminé par le résultat de la comparaison entre une information délivrée par le capteur de pollution d'air extérieur et une autre information délivrée par le capteur de pollution intérieur.

Avantageusement, une information concernant l'état de pollution de l'habitacle est envoyée au tableau de bord du véhicule.

### Brève description des dessins

D'autres particularités et avantages du dispositif et du procédé selon l'invention ressortiront mieux à la lecture de la description faite ci-après, à titre indicatif mais non limitatif, en référence aux dessins annexés sur lesquels :
- la figure 1 illustre une installation de climatisation pour un véhicule automobile comportant un pulseur et un moyen de filtration ;
- la figure 2 est une variante de la figure 1 ;
- la figure 3 illustre schématiquement un dispositif de commande comportant un circuit de commutation selon l'invention ;
- les figures 4A à 4C illustrent schématiquement trois variantes d'un dispositif de commande comportant un relais selon l'invention ;
- la figure 5 illustre schématiquement un dispositif de commande comportant un relais inversé selon l'invention ;
- la figure 6 illustre schématiquement un dispositif de commande comportant des simples fils de connexion,selon l'invention ;
- la figure 7 illustre schématiquement un dispositif de commande comportant un module de commutation selon l'invention ;
- la figure 8 illustre un module de commutation selon la figure 7 ; et
- la figure 9 est un organigramme illustrant un processus de commande selon l'invention.

### Description détaillée de modes préférentiels de réalisation

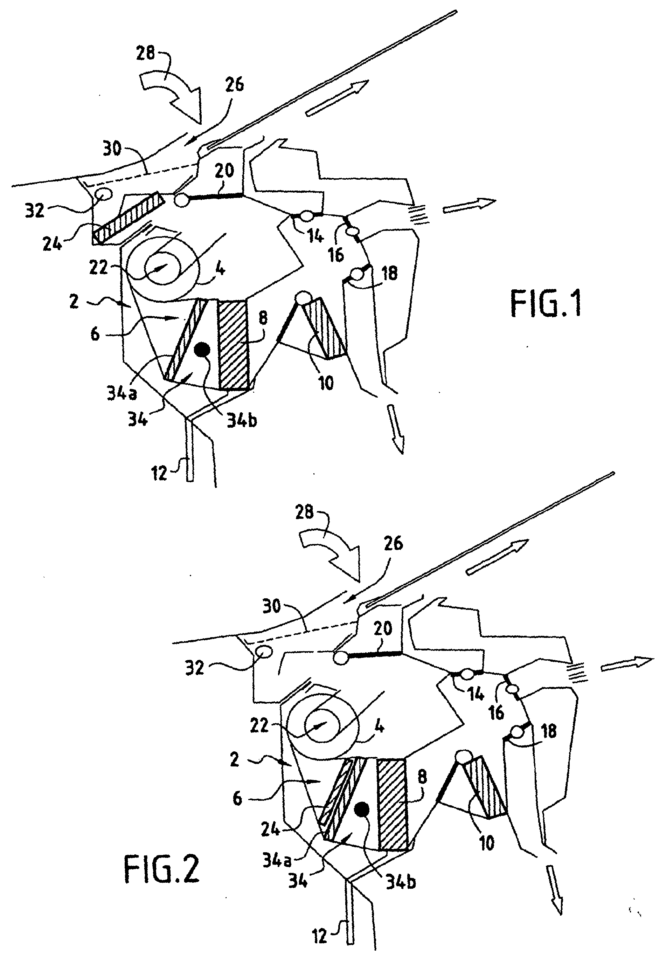

Le principe de l'invention repose sur la commande d'une installation de chauffage et/ou climatisation intégrant par exemple un système de filtration par photocatalyse, comme l'illustrent les figures 1 et 2.

L'installation de climatisation 2 de la figure 1 comporte, de façon bien connue, un groupe moto-ventilateur ou pulseur 4, délivrant un flux d'air dans un conduit de distribution d'air 6. Dans ce dernier sont disposés un évaporateur 8 d'un circuit de réfrigération (lorsque la fonction climatisation d'air est présente), un radiateur échangeur de chaleur à liquide 10 parcouru par le liquide de refroidissement du moteur du véhicule. L'évaporateur 8 est disposé au niveau d'un conduit 12 d'écoulement de condensation.

En aval du radiateur 10, le conduit d'air 6 distribue l'air vers des bouches de sortie s'ouvrant dans l'habitacle du véhicule. La distribution et le mixage éventuel de l'air se font à l'aide de volets commandés. Un volet 14 contrôle la sortie dégivrage, un autre 16 contrôle la sortie aération et un troisième 18 contrôle la sortie pieds.

L'air circulant dans le conduit provient soit de l'extérieur du véhicule (air extérieur), soit de son habitacle (recyclage intérieur) selon la position d'un volet 20 monté sous la planche de bord du véhicule. L'air est admis dans le conduit 6 à partir d'une ouverture 22 disposée au fond d'un boîtier de volute du pulseur 4.

Un filtre 24 à particules est monté dans l'entrée d'air 26 dans un flux direct 28 en provenance de l'extérieur du véhicule. Le filtre 24 à particules est protégé de la pluie et des grosses particules, de façon bien connue, par un système de chicanes non représenté et par un grillage 30.

En outre, un capteur 32 de pollution extérieure est disposé en amont du filtre 24 à particules par rapport au flux d'air, de manière à détecter la présence de polluant dans l'air extérieur.

En variante, le capteur de pollution extérieure peut être disposé en aval du filtre à particules, de manière à détecter la présence de polluant dans le flux d'air filtré, évitant ainsi l'exposition du capteur à un flux d'air chargé de particules ou poussières et réduisant tout encrassement ou détérioration du capteur.

Un moyen de filtration est intégré dans le conduit de distribution d'air 6. Ce moyen de filtration est du type photocatalyseur ou module de dépollution plasma catalytique combiné à un module de dépollution électrostatique.

Le moyen de filtration par photocatalyse ou photocatalyseur 34, comportant un filtre photocatalyseur 34a et des lampes UV 34b, est monté dans le conduit 6 entre le pulseur 4 et l'évaporateur 8. Ainsi, l'air est constamment purifié qu'il soit en recyclage intérieur ou en provenance de l'extérieur du véhicule.

A titre d'exemple, le filtre photocatalyseur 34a est un filtre combiné comportant plusieurs couches dont une est constituée d'un agent photocatalyseur intimement associé à des grains d'un adsorbant.

Les lampes UV 34b sont disposées en aval du filtre photocatalyseur 34a par rapport au flux d'air et sont orientées de sorte à irradier la majorité de la surface utile de ce filtre 34a.

Selon l'architecture de la figure 1, il est possible d'utiliser l'évaporateur 8 comme un support d'un agent photocatalyseur et de le faire irradier à partir par exemple, des mêmes lampes UV 34b montées en aval du filtre photocatalyseur 34a.

Ainsi, l'activation du photocatalyseur en surface de l'évaporateur 8 permet la destruction et/ou la non-prolifération des micro-organismes se développant sur cette surface réduisant considérablement les mauvaises odeurs.

Le module de dépollution plasma catalytique utilisé pour cette application repose sur la technologie plasma de décharge à barrière diélectrique (Dielectric Barrier Discharge - DBD) avec des tensions d'amorçage des décharges comprises entre 3 et 15 kV et une puissance électrique consommée de 50W. Le catalyseur est déposé après le module plasma, directement sur l'évaporateur 8, ou sur un autre support de type nids d'abeille, non-tissés permettant une augmentation de la surface utile tout en conservant une faible perte de charge.

Ce module permet la filtration des composés gazeux comme les composés organiques volatiles et des micro-organismes véhiculés par l'air du système de climatisation.

Avec ce module de dépollution plasma catalytique est combiné un module de dépollution électrostatique permettant de purifier l'air véhiculé par le système de climatisation des particules qu'il contient. Ce module utilise un premier composant ayant pour fonction principale la charge des particules entrante et un second composant permettant la séparation des particules et de l'air. Le diamètre de coupure d'un tel système est de 0,1µm. La partie ionisante est typiquement un ensemble de plaque alimenté par des tensions comprises entre 2 et 8kV. La partie collectrice de ce type de système peut être un ensemble de plaques collectrices alimentées à des tensions comprises, elles aussi, entre 2 et 8kV ou un filtre non-tissé.

La description ci après est faite en rapport avec le moyen de filtration du type photocatalyseur (34) mais il pourrait tout aussi bien s'agir du module de dépollution plasma catalytique combiné au module de dépollution électrostatique.

La figure 2 est une variante où le filtre 24 à particules est monté dans le conduit 6 entre le pulseur 4 et le photocatalyseur 34 directement en amont de ce dernier par rapport à l'écoulement de l'air. Toute chose étant égale par ailleurs.

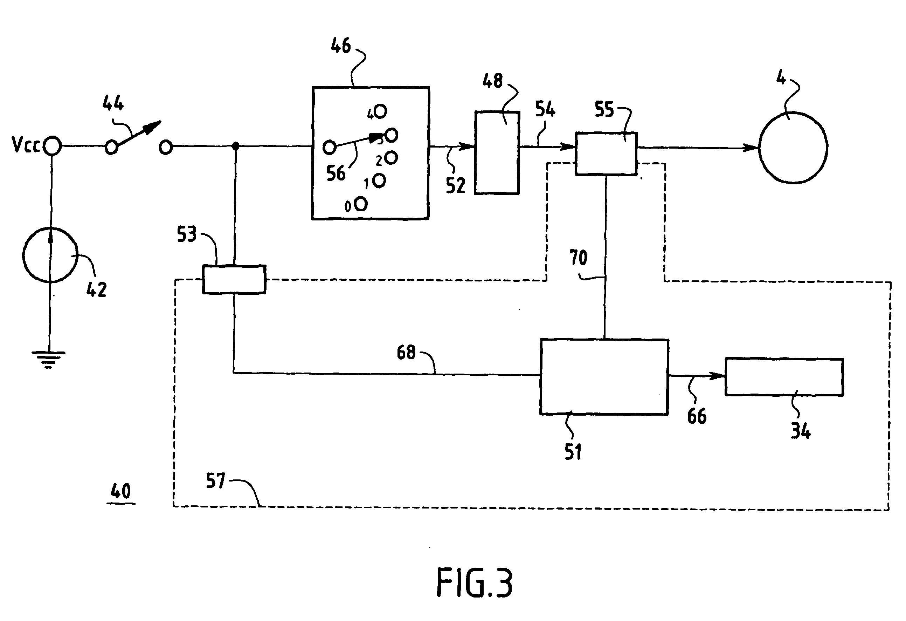

Comme le montre de façon très schématique la figure 3, un dispositif de commande 40, d'une installation de chauffage et/ou climatisation, comprend de manière générale, un circuit électrique comportant une source d'alimentation 42 de tension Vcc, un interrupteur principal 44, un tableau de commande 46, et un module de variation de vitesse 48.

La tension Vcc peut être la tension de batterie du véhicule (par exemple une tension de 12V) ou une tension dérivée de celle-ci et l'interrupteur principal 44 est par exemple la clé de contact du véhicule.

Le module de variation de vitesse 48 est relié à la source d'alimentation 42 au travers du tableau de commande 46 et délivre sélectivement au pulseur 4 une tension d'alimentation, selon une vitesse sélectionnée au tableau de commande 46.

Ainsi, le module de variation de vitesse 48 reçoit une tension d'alimentation et des signaux de commande de vitesse du pulseur par une connexion 52, pour délivrer l'alimentation nécessaire par une connexion 54 au pulseur 4.

On notera que le module de variation de vitesse 48 peut être intégré au pulseur, au tableau de commande ou ailleurs.

De façon connue, le tableau de commande 46 est intégré dans le tableau de bord du véhicule et comprend un bouton de commande 56 définissant une pluralité d'emplacements de commande (par exemple emplacements 0 à 4) du flux d'air correspondant à une pluralité de vitesses de rotation du pulseur, allant d'une vitesse nulle (position 0) à une vitesse maximale (position 4).

Conformément à l'invention, le dispositif de commande 40, comprend en outre des moyens de liaison représentés dans la figure 3 par un circuit de commutation 51 et des liens électriques 66, 68 et 70 reliant le photocatalyseur 34 au circuit électrique du dispositif de commande 40.

Le circuit de commutation 51 peut par exemple comporter un relais ou un transistor de puissance.

De façon schématique, lorsque le circuit de commutation 51 détecte, par le lien 70, que le pulseur est alimenté, il établit la connexion du photocatalyseur 34 avec la source d'alimentation 42 aux travers des liens 66 et 68. Lorsque le pulseur n'est pas ou n'est plus alimenté, le circuit de commutation 51 n'établit pas ou coupe l'alimentation du photocatalyseur 34.

Ainsi, le circuit de commutation 51 permet la connexion du photocatalyseur 34 avec la source d'alimentation 42 quand un flux d'air est présent dans l'installation 2 de climatisation.

Dans cet exemple, le flux d'air est crée par la mise en fonctionnement du pulseur.

L'avantage de faire fonctionner en continu le photocatalyseur avec le pulseur permet de purifier l'agent catalyseur (TiO2) et le charbon actif sous l'effet des lampes UV dans les phases où l'air extérieur n'est pas pollué.

A titre d'exemple, le module de variation de vitesse 48 comprend un circuit diviseur de tension délivrant au pulseur différents niveaux de tensions selon la position du bouton de commande 56.

Par ailleurs, le module de variation de vitesse 48 peut être un module électronique fonctionnant selon la méthode de modulation d'impulsion en largeur (PWM), faisant ainsi varier la durée d'une série continue d'impulsions de fréquence et d'amplitude stables, selon les informations de vitesse à transmettre au pulseur. Le signal carré délivré par le module peut être transformé en une tension efficace par des filtres du type RC.

Ceci est possible par l'utilisation d'un tableau de commande 46 apte à délivrer une information électrique assimilable par le module de variation de vitesse fonctionnant selon la méthode PWM, c'est à dire un tableau de commande de type électronique ou semi-électronique. Cette information électrique peut être alors du type analogique (tension variable), par bus multiplexé ou du type PWM.

Ainsi, lorsque la clé de contact 44 est actionnée, l'alimentation du pulseur 4 peut alors être commandée au travers le module de variation de vitesse 48 par le tableau de commande 46.

Il est par ailleurs envisageable que le pulseur 4 se mette automatiquement en action, à une vitesse minimale, dès que la clé de contact 44 est actionnée.

Avantageusement, les moyens de liaisons comprennent des connecteurs enfichables 53 et 55 formant ainsi un module de connexion prêt-à-monter (kit 57) du photocatalyseur 34 permettant un montage ou démontage facile du photocatalyseur 34 sans aucune modification sur le véhicule. De plus, le module de connexion prêt-à-monter 57 peut s'adapter sur toutes les versions de véhicules et peut être facilement monté comme une pièce de rechange.

Bien évidemment, le photocatalyseur 34 peut aussi être branché de façon permanente dans l'installation 2 de chauffage et/ou climatisation.

Le module de connexion prêt-à-monter 57 du photocatalyseur peut être branché à l'alimentation via l'interfaçage du faisceau véhicule au niveau du pulseur ou au niveau de l'antivol de direction.

De préférence, afin d'avoir un accès aisé, le module de connexion prêt-à-monter 57 du photocatalyseur peut être alimenté par un branchement au niveau de l'allume cigare du véhicule.

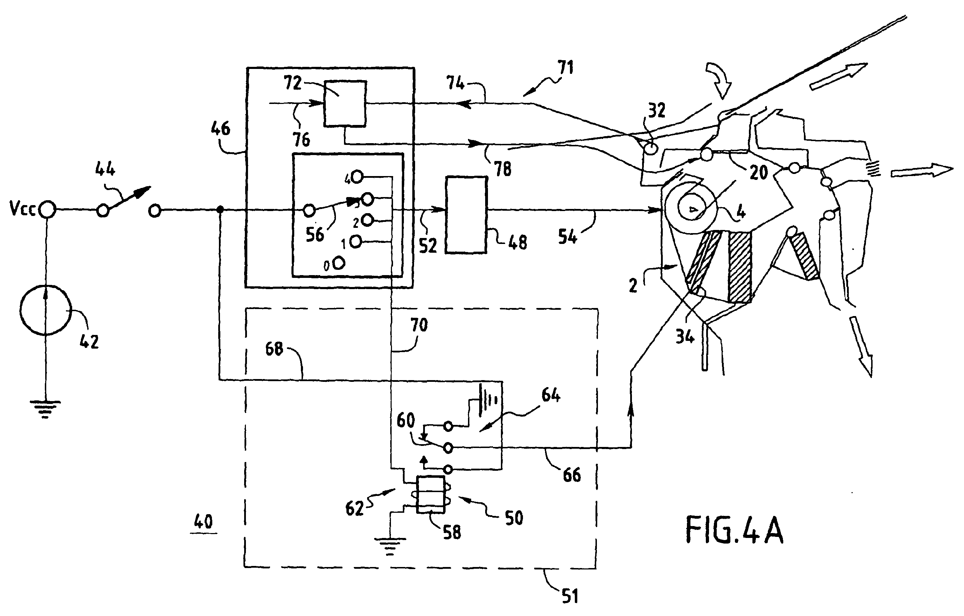

La figure 4A, illustre schématiquement un exemple d'un dispositif de commande 40, avec un circuit de commutation 51 comportant un relais 50.

Le relais 50 schématisé par une bobine 58 et un contact 60 comporte un circuit d'entrée 62 alimentant la bobine 58 et un circuit de sortie 64 comportant le contact 60 du relais 50.

Le circuit d'entrée 62 du relais 50 est relié au tableau de commande 46 et le circuit de sortie 64 ouvre ou ferme le circuit reliant le photocatalyseur 34 à la source d'alimentation 42, selon la position du contact 60.

Lorsqu'un ordre d'actionnement du pulseur 4 est reçu sur le tableau de commande 46, ce dernier envoie, au travers d'une connexion 70, un courant électrique de commande, qui parcourt le circuit d'entrée 62, permettant ainsi au contact 60 du relais 50 d'établir la connexion entre le photocatalyseur 34 et la source d'alimentation 42.

Par ailleurs, lorsque le circuit d'entrée 62 n'est plus parcouru par un courant de commande, une force de rappel ramène le contact 60 du relais 50 dans une position de repos qui coupe l'alimentation du photocatalyseur 34.

On notera que le courant de commande est par exemple un courant de fuite produit lorsque le pulseur est alimenté, c'est-à-dire lorsque le bouton de commande 56 est positionné sur l'un quelconque des emplacements 1 à 4.

Ainsi, le relais 50 et les liens 66, 68 et 70 définissent des moyens de liaison assurant la liaison du photocatalyseur 34 à la source d'alimentation 42 que si le pulseur 4 est alimenté. Le photocatalyseur 34 se trouve alors toujours dans un flux d'air lorsqu'il est en fonctionnement, évitant ainsi tout réchauffement excessif de son environnement.

Par ailleurs, grâce à l'architecture particulière du circuit de commande et au relais, l'alimentation du pulseur n'est pas affectée par celle du photocatalyseur. Ainsi, l'aéraulique et l'efficacité du pulseur sont préservés.

On notera que, le relais 50 peut être un relais électrique, électromécanique ou électronique de sorte que son circuit de sortie change d'état lorsque certaines conditions sont remplies dans son circuit électrique d'entrée.

De même, le relais 50 peut être un relais à temps spécifié de sorte que le photocatalyseur 34 fonctionne après un certain temps prédéterminé du fonctionnement du pulseur 4. Ainsi, le photocatalyseur 34 est mieux protégé, sachant que le temps de réponse du pulseur 4 peut être plus grand que celui des lampes UV 34b.

Conformément à l'invention le dispositif de commande 40 comprend en outre un circuit 71 reliant le capteur 32 de pollution extérieur à un comparateur 72 compris dans le tableau de commande 46 et destiné à comparer un signal électrique 74 de mesure émis par le capteur 32 avec un signal de référence 76 donnant une valeur seuil et en déduire un signal de commande 78 qui est envoyé à un moteur pas à pas (non représenté) agissant sur le déplacement du volet 20 à l'entrée d'air.

Quand un flux d'air est présent dans l'installation et si la teneur en polluant détectée par le capteur 32 est en dessous d'une valeur donnée correspondante à la valeur seuil du signal de référence 76, le moteur pas à pas commandant le volet 20 est mis en action afin de placer le volet 20 dans la position « air extérieur ».

Par contre, si la teneur en polluant détectée par le capteur 32 atteint ou dépasse la valeur seuil, le volet 20 est placé dans la position « recyclage intérieur». Ainsi, les passagers sont protégés de la pollution et la durée de vie du photocatalyseur 34 est augmentée.

Le capteur 32 permet alors de détecter la présence de polluants dans le flux d'air extérieur et d'amener le volet 20 de façon automatique dans l'une ou l'autre de ses positions, en fonction de la présence ou de l'absence de polluant.

De façon connue, un capteur 32 de pollution comprend un film chauffé par l'alimentation électrique et qui change de résistance lorsqu'il réagit avec certains gaz. Le capteur peut être du type réducteur détectant des gaz tel que, les hydrocarbures, le monoxyde de carbone, le méthane, ou du type oxydant détectant des gaz tel que, les oxydes d'azote ou l'ozone.

Afin que le capteur ne soit pas affecté par un pic de pollution isolé dans l'espace ou dans le temps, il comprend en général, un circuit logique ou une unité de traitement qui moyenne les pics de pollution rencontrés sur un temps donné, en général quelques secondes, et réactualise le seuil de détection en fonction du type d'environnement. Par exemple, le bruit de fond de la pollution rencontré en ville n'est pas du tout le même que celui rencontré en compagne.

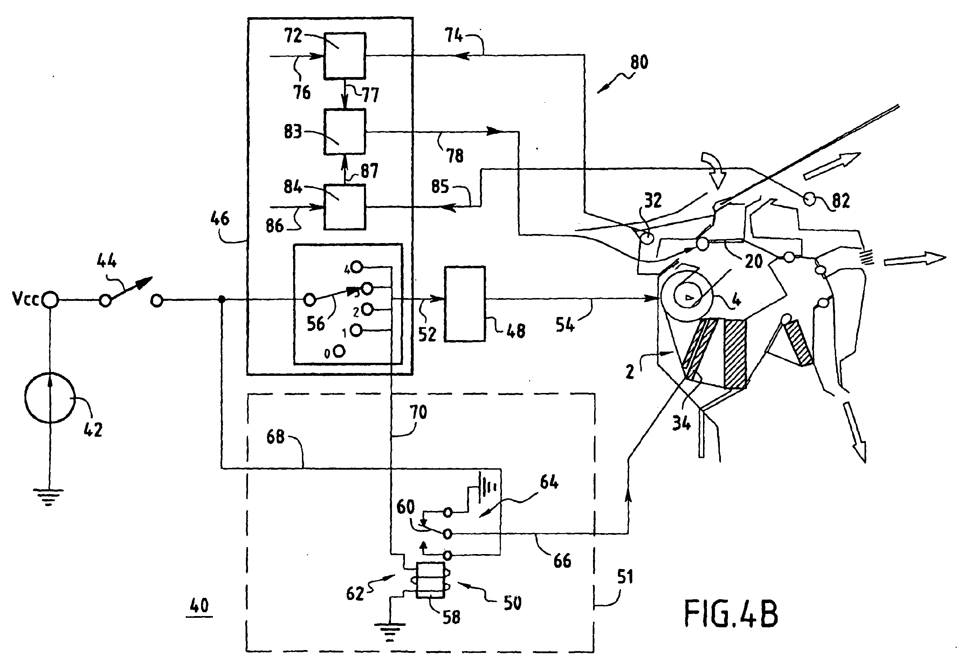

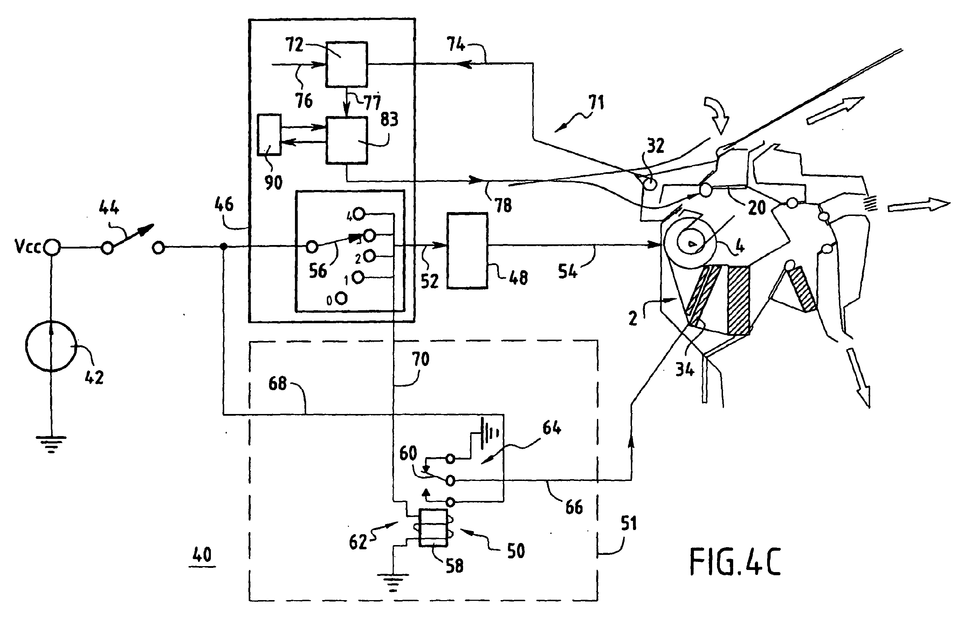

Les figures 4B et 4C illustrent deux variantes de réalisation du dispositif de commande.

Selon la variante de la figure 4B, le dispositif de commande 40 comprend un circuit 80 reliant le capteur 32 de pollution extérieure à un premier comparateur 72 destiné à comparer le signal électrique 74 de mesure émis par le capteur 32 avec le signal de référence 76 donnant une valeur seuil et en déduire un premier signal 77 qui est envoyé à une unité de contrôle 83, par exemple un simple circuit logique compris dans le tableau de commande 46.

En outre, le circuit 80 relie un second capteur 82 de pollution disposé dans l'habitacle à un second comparateur 84 destiné à comparer un signal électrique 85 de mesure émis par le capteur 82 de pollution de l'habitacle avec un signal de référence 86 donnant une valeur seuil et en déduire un signal 87 qui est envoyé à l'unité de contrôle 83.

Selon cette variante, l'unité de contrôle 83 commande, par le signal 78, le volet 20 de façon synchronisée et automatique en l'amenant dans l'une ou l'autre de ses positions, en fonction de la présence de polluant dans l'air extérieur ou de l'absence de polluant dans l'habitacle.

Ainsi, si la teneur en polluant détectée par le capteur 32 de pollution extérieure atteint ou dépasse la valeur seuil, le volet 20 est placé dans la position « recyclage intérieur».

Lorsque la teneur en polluant détectée par le capteur 82 de pollution dans l'habitacle est en dessus d'une valeur donnée le volet 20 est placé dans la position « air extérieur ».

Le capteur (82) pollution intérieure a aussi pour fonction de contrôler le moyen de filtration, plus particulièrement le module de dépollution plasma catalytique combiné au module de dépollution électrostatique. La mesure du niveau de pollution est pris en compte par un algorithme de commande du système qui contrôle et adapte la puissance disponible pour ces composants afin d'obtenir une dépollution adaptée au niveau de la pollution mesurée par le capteur 82 de pollution dans l'habitacle.

Avantageusement, l'unité de contrôle 83 compare l'information délivrée par le capteur 32 de pollution d'air extérieur et celle du capteur 82 de pollution d'air intérieur afin de mettre le volet d'entrée d'air dans la position la plus favorable, c'est-à-dire, la moins polluante pour l'occupant du véhicule.

Selon la variante de la figure 4C le tableau de commande 46 comprend un temporisateur 90 relié à l'unité de contrôle 83.

Si la teneur en polluant détectée par le capteur 32 de pollution extérieure atteint ou dépasse la valeur seuil, l'unité de contrôle 83 place le volet 20 dans la position « recyclage intérieur», par le signal 78 et déclenche le temporisateur 90.

Après l'écoulement d'un temps prédéterminé dans le mode « recyclage intérieur», le temporisateur envoi un signal à l'unité de contrôle 83 qui à son tour amène le volet dans la position « air extérieur ».

Cette durée est déterminée en fonction des caractéristiques du photocatalyseur et du pulseur et choisie suffisamment longue pour purifier l'air dans l'habitacle et suffisamment courte pour empêcher la formation des odeurs désagréables. En effet, après un fonctionnement trop long en recyclage intérieur, des odeurs désagréables peuvent apparaître dans l'habitacle à cause du confinement. De plus, si le véhicule transporte deux passagers ou plus, on a rapidement un embouage des fenêtres causé par l'humidité dégagée par les passagers.

En bon compromis, cette durée peut être comprise entre 3 minutes et 10 minutes, et de préférence entre 4 minutes et 5 minutes.

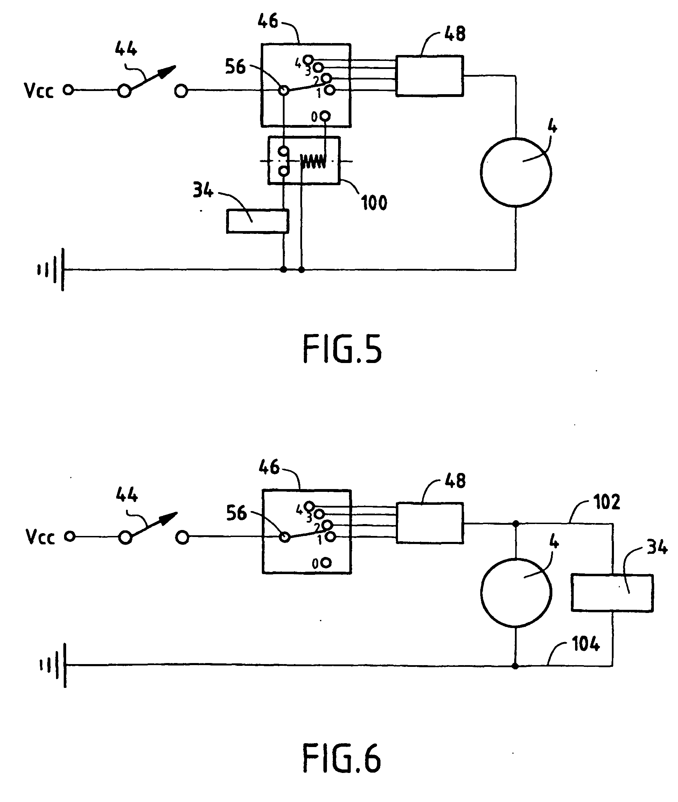

Conformément à l'invention, les figures 5 à 7, illustrent d'autres modes de réalisation du dispositif de commande d'une installation de chauffage et/ou climatisation.

Ces modes comportent les mêmes variantes décrites ci-dessus, concernant la détection de polluants et la mise automatique de l'installation dans l'une ou l'autre de modes « recyclage intérieur » ou « air extérieur ».

Selon l'exemple de la figure 5, le relais décrit dans la figure 4A est remplacé par un relais inversé 100.

En effet, un relais inversé 100 est relié au tableau de commande 46 et assure la liaison du photocatalyseur 34 avec la source d'alimentation électrique Vcc au travers l'interrupteur principal 44, de sorte que lorsque aucun ordre d'actionnement du pulseur 4 n'est reçu sur le tableau de commande 46, le relais inversé 100 déconnecte le photocatalyseur 34 de la source d'alimentation Vcc.

Autrement dit, lorsque le bouton 56 de commande du tableau de commande 46 est sur la position 0 (pulseur non alimenté), le relais inversé 100 coupe l'alimentation du photocatalyseur 34.

Par contre, lorsque le bouton 56 de commande est sur une position autre que 0 (pulseur alimenté), le relais inversé permet l'alimentation du photocatalyseur 34.

Selon l'exemple de la figure 6, le relais est omis et des câbles électriques 102 et 104 relient le photocatalyseur 34 en dérivation avec le pulseur 4.

L'avantage de ce mode de réalisation est un coût plus réduit et une simplicité de connexion. Il est surtout avantageux dans le cas où un photocatalyseur 34 est intégré pour ta première fois dans une installation de climatisation déjà existante.

On notera qu'une connexion en dérivation ne doit pas trop perturber l'aéraulique du pulseur 4 sachant que ce dernier débite un courant d'une intensité de 30 A en vitesse maximale et de 3 A à 6 A, sous une tension inférieure à 5V, en vitesse minimale, tandis que le photocatalyseur débite une intensité de courant d'environ 0,5 A.

Selon cette variante, le photocatalyseur est prévu pour fonctionner sous une tension variable équivalente à la tension d'alimentation variable du pulseur, grâce à une électronique de pilotage particulière apte à interpréter cette tension variable pour la transformer en une information de pilotage du photocatalyseur 34.

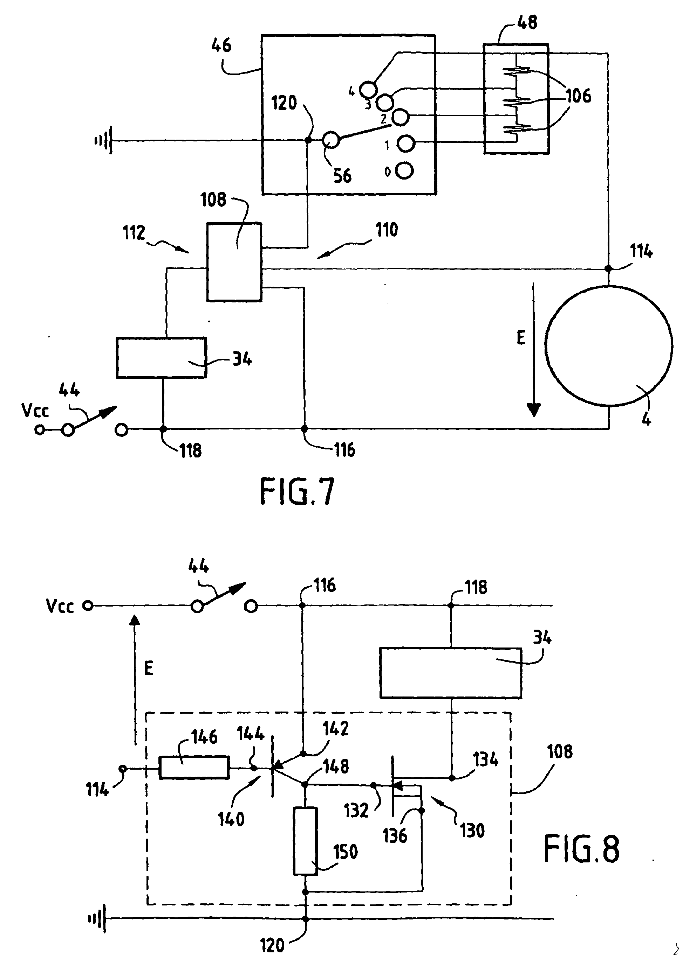

Selon l'exemple de la figure 7, le tableau de commande 46 est maintenant relié à la masse, procurant ainsi plus de sécurité pour l'utilisateur en réduisant considérablement les arcs électriques.

Par ailleurs, comme précédemment le tableau de commande 46 est relié au module de variation de vitesse 48 qui lui est relié au pulseur 4.

A titre d'exemple, le module de variation de vitesse 48 est schématisé par un circuit diviseur de tension comportant des résistances 106 en série.

Ainsi, le module de variation de vitesse 48 délivre sélectivement au pulseur 4 une tension d'alimentation selon la vitesse sélectionnée au tableau de commande 46.

En outre, le dispositif de commande de cet exemple comprend un module de commutation 108 comportant un circuit d'entrée 110 et un circuit de sortie 112. Le circuit d'entrée 110 est relié aux bornes 114 et 116 du pulseur 4 et le circuit de sortie 112 est relié au photocatalyseur 34 qui est lui même relié au potentiel Vcc, au point 118. Bien entendu, le module de commutation 108 est aussi relié à la masse au point 120.

On notera que la borne 116 du pulseur 4 et une borne du photocatalyseur 34 sont reliées au potentiel Vcc au travers de l'interrupteur principal 44.

Ainsi, lorsque la tension E aux bornes du pulseur 4 atteint ou dépasse une valeur seuil (par exemple 2V), le module de commutation 108 établie la connexion du photocatalyseur 34 avec la source d'alimentation.

Par contre, lorsque la tension E aux bornes du pulseur 4 est en dessous de la valeur seuil, c'est-à-dire que le pulseur est arrêté ou fonctionne à une vitesse très faible, le module de commutation 108 coupe l'alimentation du photocatalyseur 34.

La figure 8, illustre plus en détail un exemple d'un module de commutation 108 selon la figure 7.

Selon cet exemple, le module de commutation 108 (en traits discontinus) comprend un transistor MOS 130 dont la tension d'entrée qui dépend de ladite valeur seuil, est commandée par un transistor bipolaire 140.

En effet, la borne 116 du plus grand potentiel du pulseur 4 est connectée à l'émetteur 142 du transistor bipolaire 140, tandis que l'autre borne 114, de moindre potentiel, est connectée à la base 144 du transistor 140, au travers d'une résistance 146.

Ainsi, le niveau de la tension base-émetteur du transistor bipolaire 140 est associé à la tension E aux bornes du pulseur 4.

Le collecteur 148 du transistor bipolaire 140 est connecté à la masse (au point 120) au travers d'une seconde résistance 150.

En outre, le transistor MOS 130, à sa grille 132 connectée au collecteur 148 du transistor bipolaire 140, son drain 134 est connecté au potentiel Vcc (au point 118), au travers du photocatalyseur 34, et sa source 136 est connectée à la masse (point 120).

La tension base-émetteur du transistor bipolaire 140 détermine ainsi la tension grille-source du transistor MOS 130 impliquant en conséquence, la fermeture ou l'ouverture du circuit entre le drain 134 et la source 130 et commandant ainsi l'alimentation ou non du photocatalyseur 34.

Si le pulseur 4 est arrêté, la tension E à ses bornes est nulle, et par conséquent la tension d'entrée du transistor MOS 130, c'est-à-dire la tension grille-source est nulle et alors il n'y a pas de canal conducteur entre la source 136 et le drain 134 et donc le photocatalyseur 34 n'est pas alimenté.

Par contre, si le pulseur 4 est en marche et si la tension E à ses bornes est au dessus d'une tension seuil, par exemple 2 V, le canal entre la source 136 et le drain 134 est conducteur et donc le photocatalyseur 34 est alimenté.

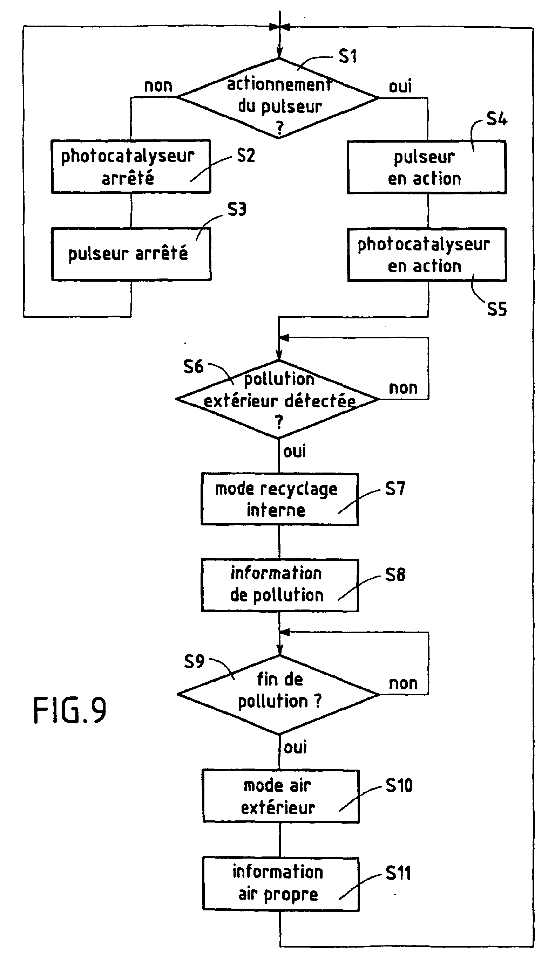

Conformément à l'invention, la figure 9 est un organigramme illustrant un exemple d'un processus de commande d'une installation de chauffage et/ou climatisation de l'habitacle d'un véhicule.

L'étape S1 est un test indiquant si un ordre d'actionnement du pulseur 4 est commandé par l'interrupteur principal 44 et le tableau de commande 46 (voir figures 3 à 4C).

Si ce n'est pas le cas, le photocatalyseur et le pulseur sont arrêtés (étapes S2 et S3), avant de revenir au test S1.

Dans l'affirmative, le pulseur est actionné (étape S4) et le photocatalyseur est actionné (étape S5).

Lorsqu'il est détecté, par un capteur 32 de pollution d'air extérieur, la présence d'un polluant dans le flux d'air envoyé dans l'installation de climatisation (test S6), le tableau de commande 46 agit sur le déplacement d'un volet 20 d'entrée d'air pour l'amener dans une position «recyclage intérieur» (étape S7).

A l'étape S8, une information concernant l'état de pollution de l'habitacle est envoyée au tableau de bord du véhicule.

Si le test S6 n'indique pas la détection de polluant par le capteur 32 de pollution d'air extérieur, alors on reboucle sur le même test.

Lorsque après passage au mode «recyclage intérieur», un capteur 82 de pollution intérieure (voir figure 3B) disposé dans l'habitacle ne détecte plus la présence d'un polluant dans l'habitacle (test S9), le tableau de commande 46 agit sur le déplacement du volet 20 d'entrée d'air pour l'amener dans une position «air extérieur» (étape S10).

A l'étape S11, une information indiquant la présence d'air propre dans l'habitacle est envoyée au tableau de bord du véhicule et on reboucle sur le test initial S1.

Si au test 59, le capteur 82 de pollution intérieure ne détecte pas l'absence de polluant dans l'habitacle, alors on reboucle sur le même test.

Ainsi, le procédé consiste à s'assurer que le moyen de filtration ne fonctionne que si un flux d'air est présent dans l'installation, tout en s'assurant que l'installation de chauffage et/ou climatisation est dans un mode «recyclage intérieur», si la présence d'un polluant est détecté dans le flux d'air envoyé dans l'installation.

En variante, le test S8 consiste en la remise de l'installation de climatisation dans le mode «air extérieur», après l'écoulement d'un temps prédéterminé dans le mode «recyclage intérieur». La durée prédéterminée peut être comprise entre 3 minutes et 10 minutes, et de préférence entre 4 minutes et 5 minutes.

Encore en variante, le test S8 consiste en la remise de l'installation de climatisation dans le mode «air extérieur», si le capteur de pollution d'air extérieur ne détecte plus la présence de polluant.

## Revendications

1. Dispositif de commande d'une installation (2) de chauffage et/ou climatisation de l'habitacle d'un véhicule, ladite installation comprenant un pulseur (4) et un moyen de filtration propre à purifier l'air, le dispositif de commande comprenant un circuit électrique comportant une source d'alimentation (42), **caractérisé en ce que** des moyens de liaison sont prévus pour s'assurer que le moyen de filtration est mis en fonctionnement seulement quand un flux d'air est présent dans l'installation (2), lesdits moyens de liaison consistent en un circuit de commutation (51) ou des câbles électriques (102, 104) ou des connecteurs enfichables (53, 55).

2. Dispositif selon la revendication 1, **caractérisé en ce que** le flux d'air est crée par la mise en fonctionnement du pulseur (4).

3. Dispositif selon la revendication 1 ou 2, **caractérisé en ce que** le circuit de commutation (51) permet la connexion du moyen de filtration avec la source d'alimentation (42) quand le flux d'air est présent dans l'installation.

4. Dispositif selon la revendication 3, **caractérisé en ce que** le circuit de commutation (51) comprend un relais (50) relié à un tableau de commande (46) et assurant la liaison du moyen de filtration avec la source d'alimentation (42) de sorte que lorsqu'un ordre d'actionnement du pulseur (4) est reçu sur le tableau de commande (46), le relais (50) connecte le moyen de filtration à la source d'alimentation (42).

5. Dispositif selon la revendication 3, **caractérisé en ce que** le circuit de commutation (51) comprend un relais inversé (100) relié à un tableau de commande (46) et assurant la liaison du moyen de filtration avec la source d'alimentation (42) de sorte que lorsque aucun ordre d'actionnement du pulseur (4) n'est reçu sur le tableau de commande (46), le relais inversé (100) déconnecte le moyen de filtration de la source d'alimentation (42).

6. Dispositif selon la revendication 3, **caractérisé en ce que** le circuit de commutation (51) comprend un module de commutation (108) dont l'entrée (110) est reliée à un tableau de commande (46) et aux bornes (114, 116) du pulseur (4) et dont la sortie (112) est reliée au moyen de filtration, de sorte que lorsque la tension E aux bornes (114, 116) du pulseur (4) est au-dessus d'une valeur seuil, le module de commutation (108) permet la connexion du moyen de filtration avec la source d'alimentation.

7. Dispositif selon la revendication 6, **caractérisé en ce que** le module de commutation (108) comprend un transistor MOS (130) dont la tension d'entrée, définie par ladite valeur seuil, est commandée par un transistor bipolaire (140).

8. Dispositif selon l'une quelconque des revendications 1 à 6 **caractérisé en ce qu'**il comprend un module de variation de vitesse (48) qui fonctionne selon la méthode de modulation d'impulsion en largeur en réponse à une information électrique adaptée délivrée par un tableau de commande (46).

9. Dispositif selon la revendication 1 ou 2, **caractérisé en ce que** les câbles électriques (102, 104) relient le moyen de filtration en dérivation avec le pulseur (4).

10. Dispositif selon la revendication 9, **caractérisé en ce que** le moyen de filtration comporte un circuit électrique de pilotage lui permettant de fonctionner sous une tension variable équivalente à la tension d'alimentation variable du pulseur (4).

11. Dispositif selon l'une quelconque des revendications 1 à 10, **caractérisé en ce qu'**il comporte en outre un capteur (32) de pollution d'air extérieur, qui délivre une information à un tableau de commande (46), de sorte que ledit tableau de commande agit sur le déplacement d'un volet (20) d'entrée d'air pour l'amener dans une position «recyclage intérieur» lorsque la teneur en polluant détectée par ledit capteur atteint ou dépasse un seuil donné de pollution extérieure.

12. Dispositif selon la revendication 11, **caractérisé en ce que** le tableau de commande (46) est destiné à agir sur le déplacement dudit volet pour l'amener dans une position «air extérieur» lorsque la teneur en polluant détectée par le capteur (32) de pollution d'air extérieur est en dessous dudit seuil.

13. Dispositif selon l'une quelconque des revendications 1 à 11, **caractérisé en ce qu'**il comporte en outre un capteur (82) de pollution intérieure disposé dans l'habitacle et qui délivre une information à un tableau de commande (46), de sorte que ledit tableau de commande agit sur le déplacement dudit volet pour l'amener dans une position «air extérieur» lorsque la teneur en polluant détectée par le capteur (82) de pollution intérieure est en dessus d'un seuil donné de pollution intérieure.

14. Dispositif selon la revendication 13, **caractérisé en ce que** le tableau de commande comprend une unité de contrôle (83) destinée à comparer l'information délivrée par le capteur (32) de pollution d'air extérieur et celle du capteur (82) de pollution d'air intérieur afin de mettre le volet d'entrée d'air dans la position la moins polluante pour l'occupant du véhicule.

15. Dispositif selon la revendication 11, **caractérisé en ce qu'**il comporte en outre un temporisateur (90) compris dans le tableau de commande (46), de sorte que ledit tableau de commande agit sur le déplacement dudit volet pour l'amener dans une position «air extérieur», après l'écoulement d'un temps prédéterminé dans le mode «recyclage intérieur».

16. Dispositif selon l'une quelconque des revendications 1 à 15, **caractérisé en ce que** les connecteurs enfichables (53, 55) forment ainsi un module de connexion prêt-à-monter (57) qui facilite le montage ou démontage du moyen de filtration.

17. Dispositif la revendication 16, **caractérisé en ce que** le module de connexion prêt-à-monter (57) du moyen de filtration est alimenté par un branchement au niveau de l'allume-cigare du véhicule.

18. Dispositif selon l'une quelconque des revendications précédentes, **caractérisé en ce que** le moyen de filtration est un photocatalyseur (34).

19. Dispositif selon l'une quelconque des revendications 1 à 17, **caractérisé en ce que** le moyen de filtration est un module de dépollution plasma-catalytique combiné à un module de dépollution électrostatique.

20. Dispositif selon l'une quelconque des revendications 19 en combinaison avec la revendication 13, **caractérisé en ce que** le module de dépollution plasma-catalytique et le module de dépollution électrostatique sont contrôlés par le capteur (82) de pollution intérieure afin d'obtenir une dépollution adaptée au niveau de pollution mesurée.

21. Procédé de commande d'une installation (2) de chauffage et/ou climatisation de l'habitacle d'un véhicule, ladite installation comprenant un pulseur (4), un moyen de filtration propre à purifier l'air et des moyens de liaison, **caractérisé en ce que** le procédé consiste à s'assurer que le moyen de filtration ne fonctionne que si un flux d'air est présent dans l'installation, lesdits moyens de liaison consistant en un circuit de commutation (51) ou des câbles électriques (102, 104) ou des connecteurs enfichables (53, 55).

22. Procédé de commande selon la revendication 21, **caractérisé en ce que** le flux d'air est crée par la mise en fonctionnement du pulseur.

23. Procédé de commande selon la revendication 21 ou 22, **caractérisé en ce qu'**il consiste en outre à s'assurer que l'installation (2) de chauffage et/ou climatisation est dans un mode «recyclage intérieur», si un capteur (32) de pollution d'air extérieur détecte la présence d'un polluant dans le flux d'air envoyé dans ladite installation.

24. Procédé de commande selon la revendication 22 ou 23, **caractérisé en ce que** l'installation (2) de chauffage et/ou climatisation est mise dans un mode «air extérieur» si un capteur (82) de pollution intérieure disposé dans l'habitacle ne détecte pas la présence d'un polluant dans l'habitacle.

25. Procédé de commande selon la revendication 23, **caractérisé en ce que** l'installation (2) de chauffage et/ou climatisation est mise dans un mode «air extérieur», si le capteur (32) de pollution extérieure ne détecte pas la présence d'un polluant.

26. Procédé de commande selon la revendication 23, **caractérisé en ce que** l'installation (2) de chauffage et/ou climatisation est mise sélectivement dans un mode «air extérieur» ou «recyclage intérieur» selon le mode le moins polluant pour l'occupant du véhicule déterminé par le résultat de la comparaison entre une information délivrée par le capteur (32) de pollution d'air extérieur et une autre information délivrée par un capteur (82) de pollution intérieur.

27. Procédé de commande selon la revendication 23, **caractérisé en ce que** l'installation (2) de chauffage et/ou climatisation est mise dans un mode «air extérieur», après l'écoulement d'une durée prédéterminée dans le mode «recyclage intérieur»

28. Procédé de commande selon la revendication 27, **caractérisé en ce que** la durée prédéterminée est comprise entre 3 minutes et 10 minutes, et de préférence entre 4 minutes et 5 minutes.

29. Procédé de commande selon l'une quelconque des revendications 23 à 28, **caractérisé en ce qu'**une information concernant l'état de pollution de l'habitacle est envoyée à un tableau de bord du véhicule.

## Patentansprüche

1. Schaltvorrichtung einer Heizungs- und/oder Klimaanlage (2) des Fahrgastraums eines Fahrzeuges, wobei die besagte Anlage ein Gebläse (4) und ein zur Reinigung der Luft geeignetes Filterungsmittel umfasst, wobei die Schaltvorrichtung einen Stromkreis mit einer Stromquelle (42) umfasst, **dadurch gekennzeichnet, dass** Verbindungsmittel vorgesehen sind, um sicherzustellen, dass das Filterungsmittel nur in Betrieb gesetzt wird, wenn ein Luftstrom in der Anlage (2) vorhanden ist, wobei die besagten Verbindungsmittel aus einem Schaltkreis (51) oder elektrischen Kabeln (102,104) oder Steckverbindern (53, 55) bestehen.

2. Vorrichtung gemäß Anspruch 1, **dadurch gekennzeichnet, dass** der Luftstrom durch die Inbetriebnahme des Gebläses (4) entsteht.

3. Vorrichtung gemäß Anspruch 1 oder 2, **dadurch gekennzeichnet, dass** der Schaltkreis (51) die Verbindung des Filterungsmittels mit der Stromquelle (42) ermöglicht, wenn der Luftstrom in der Anlage vorhanden ist.

4. Vorrichtung gemäß Anspruch 3, **dadurch gekennzeichnet, dass** der Schaltkreis (51) ein an eine Schalttafel (46) angeschlossenes Relais (50) aufweist, das die Verbindung des Filterungsmittels mit der Stromquelle (42) gewährleistet, so dass, wenn ein Befehl zur Inbetriebsetzung des Gebläses (4) auf der Schalttafel (46) eingeht, das Relais (50) die Verbindung zwischen dem Filterungsmittel und der Stromquelle (42) herstellt.

5. Vorrichtung gemäß Anspruch 3, **dadurch gekennzeichnet, dass** der Schaltkreis (51) ein an eine Schalttafel (46) angeschlossenes Umschaltrelais (100) aufweist, das auch die Verbindung des Filterungsmittels mit der Stromquelle (42) gewährleistet, so dass, wenn kein Befehl zur Inbetriebsetzung des Gebläses (4) auf der Schalttafel (46) eingeht, das Umschaltrelais das Filterungsmittel von der Stromquelle (42) trennt.

6. Vorrichtung gemäß Anspruch 3, **dadurch gekennzeichnet dass**, der Schaltkreis (51) ein Schaltmodul (108) umfasst, dessen Eingang (110) an eine Schalttafel (46) und an die Klemmen (114, 116) des Gebläses (4) angeschlossen ist, und dessen Ausgang (112) an das Filterungsmittel angeschlossen ist, so dass, wenn die Spannung E an den Klemmen (114, 116) des Gebläses (4) über einem Schwellenwert liegt und das Schaltmodul (108) die Verbindung des Filterungsmittels mit der Stromquelle ermöglicht.

7. Vorrichtung gemäß Anspruch 6, **dadurch gekennzeichnet, dass** das Schaltmodul (108) einen MOS-Transistor (130) umfasst, dessen von dem besagten Schwellenwert bestimmte Eingangsspannung durch einen bipolaren Transistor (140) gesteuert wird.

8. Vorrichtung gemäß einem der Ansprüche 1 bis 6, **dadurch gekennzeichnet, dass** sie ein Drehzahländerungsmodul (48) umfasst, das gemäß der Methode der Impulsbreitenmodulation als Antwort auf eine entsprechende elektrische Auskunft betrieben wird, welche von einer Schalttafel (46) erteilt wird.

9. Vorrichtung gemäß Anspruch 1 oder 2, **dadurch gekennzeichnet, dass** die elektrischen Kabel (102, 104) das Filterungsmittel mit dem Gebläse (4) abzweigend verbinden.

10. Vorrichtung gemäß Anspruch 9, **dadurch gekennzeichnet, dass** das Filterungsmittel einen Steuerungsstromkreis umfasst, wodurch es mit einer schwankenden Spannung, die der schwankenden Versorgungsspannung des Gebläses (4) entspricht, betrieben werden kann.

11. Vorrichtung gemäß einem der Ansprüche 1 bis 10, **dadurch gekennzeichnet, dass** sie ferner einen Messfühler (32) für die Verschmutzung der Außenluft umfasst, welcher einer Schalttafel (46) eine Auskunft erteilt, so dass die besagte Schalttafel die Bewegung einer Lufteinlassklappe (20) bewirkt, um sie in eine Stellung "Innenluftumwälzung" zu bringen, wenn der von dem besagten Messfühler erfasste Schadstoffgehalt eine gegebene Schwelle der Außenluftverschmutzung erreicht oder überschreitet.

12. Vorrichtung gemäß Anspruch 11, **dadurch gekennzeichnet, dass** die Schalttafel (46) dazu bestimmt ist, die Bewegung der besagten Klappe zu bewirken, um sie in eine Stellung "Außenluft" zu bringen, wenn der von dem Messfühler (32) der Außenluftverschmutzung erfasste Schadstoffgehalt unter der besagten Schwelle liegt.

13. Vorrichtung gemäß einem der Ansprüche 1 bis 11, **dadurch gekennzeichnet, dass** sie ferner einen Messfühler (82) der Innenluftschmutzung in dem Fahrgastraum aufweist, welcher einer Schalttafel (46) eine Auskunft erteilt, so dass die besagte Schalttafel die Bewegung der besagten Klappe bewirkt, um sie in eine Stellung "Außenluft" zu bringen, wenn der von dem Messfühler (82) erfasste Schadstoffgehalt der Innenluft über einer gegebenen Schwelle der Innenluftverschmutzung liegt.

14. Vorrichtung gemäß Anspruch 13, **dadurch gekennzeichnet, dass** die Schalttafel eine Kontrolleinheit (83) umfasst, die dazu bestimmt ist, die von dem Messfühler (32) der Außenluftverschmutzung gelieferte Auskunft mit der vom Messfühler (82) der Innenluftverschmutzung zu vergleichen, um die Lufteinlassklappe in die für den Fahrzeuginsassen günstigste Stellung zu bringen.

15. Vorrichtung gemäß Anspruch 11, **dadurch gekennzeichnet, dass** sie ferner ein in der Schalttafel (46) befindliches Zeitrelais (90) umfasst, so dass die besagte Schalttafel die Bewegung der besagten Klappe bewirkt, um sie nach dem Ablauf einer im "Innenluftumwälzungsbetrieb" festgelegten Zeit in die Stellung "Außenluft" zu bringen.

16. Vorrichtung gemäß einem der Ansprüche 1 bis 15, **dadurch gekennzeichnet, dass** die Steckverbinder (53, 55) somit ein einbaufertiges Verbindungsmodul (57) bilden, welches den Ein- und Ausbau des Filterungsmittels erleichtert.

17. Vorrichtung gemäß Anspruch 16, **dadurch gekennzeichnet, dass** das einbaufertige Verbindungsmodul (57) des Filterungsmittels durch einen Anschluss an den Zigarettenanzünder versorgt wird.

18. Vorrichtung gemäß einem der vorangehenden Ansprüche, **dadurch gekennzeichnet, dass** das Filterungsmittel ein Photokatalysator (34) ist.

19. Vorrichtung gemäß einem der Ansprüche 1 bis 17, **dadurch gekennzeichnet, dass** das Filterungsmittel ein Plasmakatalysator-Entschmutzungsmodul, verbunden mit einem elektrostatischen Entschmutzungsmodul, ist.

20. Vorrichtung gemäß einem der Ansprüche 19 in Verbindung mit dem Anspruch 13, **dadurch gekennzeichnet, dass** der Plasmakatalysator-Entschmutzungsmodul und das elektrostatische Entschmutzungsmodul von dem Messfühler (82) der Innenluft kontrolliert werden, um eine der gemessenen Verschmutzung entsprechende Entschmutzung zu erzielen.

21. Schaltverfahren einer Heizungs- und/oder Klimaanlage (2) des Fahrgastraums eines Fahrzeugs, wobei die besagte Anlage eine Gebläse (4), ein zur Reinigung der Luft geeignetes Filterungsmittel und Verbindungsmittel umfasst, **dadurch gekennzeichnet, dass** das Verfahren darin besteht, sicherzustellen, dass das Filterungsmittel nur in Betrieb ist, wenn ein Luftstrom in der Anlage vorhanden ist, wobei die besagten Verbindungsmittel aus einem Schaltkreis (51), elektrischen Kabeln (102, 104) oder Steckverbindern (53, 55) bestehen.

22. Schaltverfahren gemäß Anspruch 21, **dadurch gekennzeichnet, dass** der Luftstrom durch die Inbetriebnahme des Gebläses entsteht.

23. Schaltverfahren gemäß Anspruch 21 oder 22, **dadurch gekennzeichnet, dass** es ferner darin besteht, sicherzustellen, dass sich die Heizungs- und/oder Klimaanlage (2) in einem "Innenluftumwälzungsbetrieb" befindet, wenn ein Messfühler (32) der Außenluftverschmutzung eine bestehende Verschmutzung in dem in die besagte Anlage geführten Luftstrom feststellt.

24. Schaltverfahren gemäß Anspruch 22 oder 23, **dadurch gekennzeichnet, dass** die Heizungs- und/oder Klimaanlage (2) in einen Betrieb "Außenluft" gesetzt wird, wenn der in dem Fahrgastraum angeordnete Messfühler (82) der Innenluftverschmutzung keine Verschmutzung in dem Fahrgastraum feststellt.

25. Schaltverfahren gemäß Anspruch 23, **dadurch gekennzeichnet, dass** die Heizungs- und/oder Klimaanlage (2) in einen Betrieb "Außenluft" gesetzt wird, wenn der Messfühler (32) der Außenluftverschmutzung keine Verschmutzung feststellt.

26. Schaltverfahren gemäß Anspruch 23, **dadurch gekennzeichnet, dass** die Heizungs- und/oder Klimaanlage (2) wahlweise entweder in den Betrieb "Außenluft" oder "Innenluftumwälzung" gesetzt wird, je nach dem Betrieb, der für den Insassen am günstigsten ist, und welcher durch das Ergebnis des Vergleiches zwischen einer von dem Messfühler (32) der Außenluftverschmutzung erteilten Auskunft und einer anderen, von einem Messfühler (82) der Innenluftverschmutzung erteilten Auskunft bestimmt ist.

27. Schaltverfahren gemäß Anspruch 23, **dadurch gekennzeichnet, dass** die Heizungs- und/oder Klimaanlage (2) nach dem Ablauf einer in dem "Innenluftumwälzungsbetrieb" festgelegten Zeit in einen Betrieb "Außenluft" gesetzt wird.

28. Steuerungsvorrichtung gemäß Anspruch 27, **dadurch gekennzeichnet, dass** die festgelegte Zeit zwischen 3 Minuten und 10 Minuten beträgt, und vorzugsweise zwischen 4 Minuten und 5 Minuten.

29. Schaltverfahren gemäß einem der Ansprüche 23 bis 28, **dadurch gekennzeichnet, dass** eine Auskunft zu dem Verschmutzungspegel des Fahrgastraums an ein Armaturenbrett des Fahrzeuges gesendet wird.

## Claims

1. Control device for a heating and/or air conditioning installation (2) for a vehicle passenger compartment, the said installation comprising a blower (4) and a means of filtration capable of purifying air, the control device including an electrical circuit comprising a power source (42), **characterised by** the fact that a means of connection is provided to ensure that the means of filtration only starts operating when there is an airflow in the installation (2), the said means of connection consisting of a switching circuit (51) or electrical cables (102, 104) or plug-in connectors (53, 55).

2. Device according to claim 1, **characterised by** the fact that the airflow is created by starting up the blower (4).

3. Device according to claim 1 or 2, **characterised by** the fact that the switching circuit (51) enables connection of the means of filtration to the power source (42) when the airflow is present in the installation.

4. Device according to claim 3, **characterised by** the fact that the switching circuit (51) includes a relay (50) that is connected to a control panel (46) and forms the link between the means of filtration and the power source (42) such that the relay (50) connects the means of filtration to the power source (42) when an instruction to activate the blower (4) is received at the control panel (46).

5. Device according to claim 3, **characterised by** the fact that the switching circuit (51) comprises an inverted relay (100) that is connected to a control panel (46) and forms the connection between the means of filtration and the power source (42) such that the inverted relay (100) disconnects the means of filtration from the power source (42) when no actuation instruction for the blower (4) is received at the control panel (46).

6. Device according to claim 3, **characterised by** the fact that the switching circuit (51) comprises a switching module (108), the input (110) of which is connected to a control panel (46) and to the terminals (114, 116) of the blower (4), and the output (112) of which is connected to the means of filtration such that when the voltage E at the terminals (114, 116) of the blower (4) is above a threshold value, the switching module (108) connects the means of filtration to the power source.

7. Device according to claim 6, **characterised by** the fact that the switching module (108) comprises a MOS transistor (130), for which the input voltage defined by the said threshold value is controlled by a bipolar transistor (140).

8. Device according to any one of claims 1 to 6, **characterised by** the fact that it comprises a speed variation module (48) that operates according to the pulse width modulation method in response to the adapted electrical information output by a control panel (46).

9. Device according to claim 1 or 2, **characterised by** the fact that the electrical cables (102, 104) connect the means of filtration in parallel with the blower (4).

10. Device according to claim 9, **characterised by** the fact that the means of filtration contains an electrical control circuit allowing it to operate at a variable voltage equivalent to the variable supply voltage of the blower (4).

11. Device according to any one of claims 1 to 10, **characterised by** the fact that it also comprises an external air pollution sensor (32) that outputs information to a control panel (46) such that the said control panel acts to displace an air inlet flap (20) to bring it into an "internal recycling" position when the pollutant content detected by the said sensor reaches or exceeds a given external pollution threshold.

12. Device according to claim 11, **characterised by** the fact that the control panel (46) will act to displace the said flap to bring it into an "external air" position when the pollutant content detected by the external air pollution sensor (32) is below the said threshold.

13. Device according to any one of claims 1 to 11, **characterised by** the fact that it also comprises an internal pollution sensor (82) that is positioned in the passenger compartment and outputs information to a control panel (46), such that the said control panel acts to displace the said flap to bring it into an "external air" position when the pollutant content detected by the internal pollution sensor (82) exceeds a given internal pollution threshold.

14. Device according to claim 13, **characterised by** the fact that the control panel includes a control unit (83) designed to compare the information output by the external air pollution sensor (32) and the internal air pollution sensor (82) so as to put the air inlet flap into the least polluting position for the vehicle occupant.

15. Device according to claim 11, **characterised by** the fact that it also comprises a timer (90) in the control panel (46) such that the said control panel acts to displace the said flap to bring it into an "external air" position after a predetermined period in "internal recycling" mode has elapsed.

16. Device according to any one of claims 1 to 15, **characterised by** the fact that the plug-in connectors (53, 55) form a ready-to-install connection module (57), thereby facilitating assembly and disassembly of the means of filtration.

17. Device according to claim 16, **characterised by** the fact that the ready-to-install connection module (57) of the means of filtration is powered by connecting it to the vehicle's cigarette lighter.

18. Device according to any one of the previous claims, **characterised by** the fact that the means of filtration uses a photocatalyst (34).

19. Device according to any one of claims 1 to 17, **characterised by** the fact that the means of filtration is a plasma-catalytic anti-pollution module combined with an electrostatic anti-pollution module.

20. Device according to claim 19 in combination with claim 13, **characterised by** the fact that the plasma-catalytic anti-pollution module and the electrostatic anti-pollution module are controlled by the internal pollution sensor (82) such that pollution removal can be adapted to the pollution level measured.

21. Control process for a heating and/or air conditioning installation (2) for a vehicle passenger compartment, the said installation comprising a blower (4), a means of filtration capable of purifying air and a means of connection, **characterised by** the fact that the process consists of ensuring that the means of filtration only functions if there is an airflow in the installation, the said means of connection consisting of a switching circuit (51) or electrical cables (102, 104) or plug-in connectors (53, 55).

22. Control process according to claim 21, **characterised by** the fact that the airflow is created by the blower being started up.

23. Control process according to claim 21 or 22, **characterised by** the fact that it also consists of ensuring that the heating and/or air conditioning installation (2) is in "internal recycling" mode if an external air pollution sensor (32) detects the presence of a pollutant in the airflow into the said installation.

24. Control process according to claim 22 or 23, **characterised by** the fact that the heating and/or air conditioning installation (2) is put into "external air" mode if an internal pollution sensor (82) placed in the passenger compartment does not detect the presence of a pollutant in the passenger compartment.

25. Control process according to claim 23, **characterised by** the fact that the heating and/or air conditioning installation (2) is put into "external air" mode if the external pollution sensor (32) does not detect the presence of a pollutant.

26. Control process according to claim 23, **characterised by** the fact that the heating and/or air conditioning installation (2) is selectively put into whichever of the "external air" and "internal recycling" modes is the least polluting for the vehicle occupant, as determined by the result of comparing the signal output by the external air pollution sensor (32) and another signal output by an internal pollution sensor (82).

27. Control process according to claim 23, **characterised by** the fact that the heating and/or air conditioning installation (2) is put into "external air" mode after a predetermined period has elapsed in "internal recycling" mode.

28. Control process according to claim 27, **characterised by** the fact that the predetermined period is between 3 and 10 minutes, and preferably between 4 and 5 minutes.

29. Control process according to any one of claims 23 to 28, **characterised by** the fact that information relating to the level of pollution in the passenger compartment is sent to an instrument panel in the vehicle.
